(19) Europäisches Patentamt
European Patent Office
Office européen des brevets

(11) **EP 4 184 932 A1**

(12) **EUROPÄISCHE PATENTANMELDUNG**

(43) Veröffentlichungstag:
24.05.2023 Patentblatt 2023/21

(21) Anmeldenummer: 22194383.0

(22) Anmeldetag: 07.09.2022

(51) Internationale Patentklassifikation (IPC):
H04N 25/131 (2023.01)          H04N 25/133 (2023.01)
H04N 25/13 (2023.01)           H04N 23/11 (2023.01)
G06V 20/56 (2022.01)

(52) Gemeinsame Patentklassifikation (CPC):
H04N 25/131; G06V 20/588; H04N 23/11;
H04N 25/133; H04N 25/135

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **10.09.2021 DE 102021210050
14.02.2022 DE 102022201523**

(71) Anmelder: **Fraunhofer-Gesellschaft zur
Förderung
der angewandten Forschung e.V.
80686 München (DE)**

(72) Erfinder:
• **DUMLER, Dietrich
80686 München (DE)**
• **WENNINGER, Franz
80686 München (DE)**
• **KUTTER, Christoph
80686 München (DE)**

(74) Vertreter: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **EIN BILDSENSOR, EIN VERFAHREN ZUM BETREIBEN EINES BILDSENSORS, EIN VERFAHREN ZUM HERSTELLEN EINES BILDSENSORS UND EIN STATIONÄRES GERÄT ODER EIN FAHRZEUG ODER EINE DROHNE MIT EINEM BILDSENSOR**

(57)     Ausführungsbeispiele der Erfindung schaffen einen Bildsensor (100, 410, 650, 720) mit einer Bildelementstruktur (100). Die Bildelementstruktur (100) weist eine Vielzahl von rasterförmig angeordneten Bildelementen (120) in einer ersten Richtung (113, 213) und in einer zweiten Richtung 116, die zu der ersten Richtung (113, 213) orthogonal ist, auf. Ein Bildelement (120) der Vielzahl von Bildelementen (120) weist eine Mehrzahl von räumlich nebeneinander angeordneten Filterelementen (130, 133, 136, 242, 244, 246, 253, 256, 263, 266) auf. Die Mehrzahl von Filterelementen (130, 133, 136, 242, 244, 246, 253, 256, 263, 266) weist wenigstens einen Farbfilter (133, 242, 244, 246) und wenigstens einen zusätzlichen Filter (136, 253, 256, 263, 266) aus einer Filtergruppe auf. Die Filtergruppe weist einen ersten Absorptionsfilter (136, 253, 256) mit einer ersten optischen Bandbreite, einen zweiten Absorptionsfilter (136, 253, 256) mit einer zweiten optischen Bandbreite, die sich von der ersten optischen Bandbreite unterscheidet, einen ersten Polarisationsfilter (136, 263, 266) mit einer ersten Polarisationscharakteristik, einen zweiten Polarisationsfilter (136, 263, 266) mit einer zweiten Polarisationscharakteristik, die sich von der ersten Polarisationscharakteristik unterscheidet, und ein Filterelement (136) ohne Absorptions- oder Polarisationswirkung auf.

Fig. 1

**Beschreibung**

Die vorliegende Anmeldung betrifft einen Bildsensor mit rasterförmig angeordneten Bildelementen, die eine Mehrzahl von Filterelementen aufweisen.

Die Erkennung der Straßenverhältnisse ist unerlässlich für ein sicheres Fahren. Moderne Fahrzeuge schätzen allgemeine Risiken der Straßenverhältnisse mithilfe von Sensoren, wie zum Beispiel mit optischen Sensoren.

Die Situation vor einem Fahrzeug wird beispielsweise mit einer Kamera aufgenommen. Auf einem Rot-Grün-Blau-Bild (RGB-Bild) ist es schwierig zum Beispiel einen nassen Fleck von einem schmutzigen Fleck auf einer Fahrbahnoberfläche zu unterscheiden, da beide einfach nur dunkel sind. Obwohl Wasser transparent ist, ist Wasser in RGB-Bildern aufgrund verschiedener Effekte, die den Weg eines Lichtstrahls verändern, leicht sichtbar. Gängige Verfahren zur Objekterkennung (object detection) verwenden RGB-Daten, um Objekte, wie zum Beispiel Passanten, zu erkennen. Objekte, wie zum Beispiel Pfützen, mit simplen Formen und mit komplexem optischem Verhalten, wie zum Beispiel starke Reflexion oder Transparenz, sind jedoch schwer zu erkennen. Umweltvariablen, wie zum Beispiel Tageslicht, Hintergrund und Untergrund, verändern das Erscheinungsbild witterungsbedingter Ablagerungen erheblich, was die Erkennung noch weiter erschwert.

RGB-Kameras oder RGB-Bildsensoren können die verschiedenen Effekte, wie zum Beispiel Absorption und/oder Polarisation, nicht bestimmen. Daher sind die Ergebnisse des Lokalisierungs- und Klassifizierungsverfahrens stark fallabhängig und unzuverlässig.

Die Aufgabe der vorliegenden Erfindung besteht deshalb darin, eine kompakte Vorrichtung zu schaffen, die eine verbesserte Erkennung von Gefahren auf einer Fahrbahnoberfläche ermöglicht.

Diese Aufgabe wird durch einen Bildsensor nach Anspruch 1, durch ein Fahrzeug nach Anspruch 8, durch ein stationäres Gerät nach Anspruch 10, durch eine Drohne nach Anspruch 12, durch ein Verfahren zum Betreiben eines Bildsensors nach Anspruch 14 oder durch ein Verfahren zum Herstellen eines Bildsensors nach Anspruch 15 gelöst.

Ausführungsbeispiele der Erfindung schaffen einen Bildsensor mit einer Bildelementstruktur. Die Bildelementstruktur weist eine Vielzahl von rasterförmig angeordneten Bildelementen in einer ersten Richtung und in einer zweiten Richtung, die zu der ersten Richtung orthogonal ist, auf.

Ein Bildelement der Vielzahl von Bildelementen weist eine Mehrzahl von räumlich nebeneinander angeordneten Filterelementen auf. Die Mehrzahl von Filterelementen weist wenigstens einen Farbfilter und wenigstens einen zusätzlichen Filter aus einer Filtergruppe auf.

Die Filtergruppe weist einen ersten Absorptionsfilter mit einer ersten optischen Bandbreite, einen zweiten Absorptionsfilter mit einer zweiten optischen Bandbreite, die sich von der ersten optischen Bandbreite unterscheidet, einen ersten Polarisationsfilter mit einer ersten Polarisationscharakteristik, einen zweiten Polarisationsfilter mit einer zweiten Polarisationscharakteristik, die sich von der ersten Polarisationscharakteristik unterscheidet, und ein Filterelement ohne Absorptions- oder Polarisationswirkung auf.

Ein Bildsensor mit rasterförmig angeordneten Bildelementen, bei dem ein Bildelement wenigstens einen Farbfilter und wenigstens einen zusätzlichen Filter aufweist, erweitert einen klassischen Kamerasensor um weitere Filter. Der erfinderische Bildsensor liefert neben den Farbinformationen zusätzliche Informationen, wie z. B. Absorptions- und/oder Polarisationsinformationen, die beispielsweise eine Differenzierung von Wasseraufkommen erleichtern.

Der Farbfilter ist ausgebildet, um das Licht farbspezifisch zu filtern, und ermöglicht es damit dem Bildsensor, Farbinformationen zu detektieren. Häufig werden drei Farbfilter verwendet, da aus drei grundlegenden Farben, wie z. B. aus den Farben Rot, Grün und Blau, alle anderen Farben mischbar sind. Ein Filterelement ohne Absorptions- oder Polarisationswirkung kann zum Beispiel einen Farbfilter aus diesen drei Farbfiltern ersetzen, um Kosten zu sparen.

Absorptionsinformationen ermöglichen es, konkrete Materialien mit bestimmen Absorptionseigenschaften in einer Sensoraufnahme leichter zu finden, und Sensoraufnahmen mit Polarisationsfiltern ermöglichen es, die an einer Oberfläche reflektierenden Lichtstrahlen zu analysieren.

Ein erfinderischer Bildsensor mit zusätzlichen Filterelementen bleibt so kompakt wie ein klassischer Bildsensor, da die Erweiterung der Filterelemente des Bildsensors um zusätzliche Filterelemente nur die Oberfläche und/oder die Auflösung des Bildsensors beeinflusst.

Mit den zusätzlichen Filterelementen liefert der erfinderische Bildsensor eine kompakte Lösung, die eine verbesserte Erkennung von Gefahren auf einer Fahrbahnoberfläche ermöglicht.

Bei Ausführungsbeispielen weist die Mehrzahl von Filterelementen einen RGB-Farbfilter und mehrere verschiedene zusätzliche Filter auf, die einen ersten Absorptionsfilter mit einer ersten optischen Bandbreite, einen zweiten Absorptionsfilter mit einer zweiten optischen Bandbreite, die sich von der ersten optischen Bandbreite unterscheidet, einen ersten Polarisationsfilter mit einer ersten Polarisationscharakteristik und einen zweiten Polarisationsfilter mit einer zweiten Polarisationscharakteristik, die sich von der ersten Polarisationscharakteristik unterscheidet, umfassen.

Ein Bildsensor mit einem RGB-Farbfilter und mit mehreren verschiedenen zusätzlichen Filtern, wie z. B. mit zwei unterschiedlichen Absorptionsfiltern und mit zwei unterschiedlichen Polarisationsfiltern, liefert mehr Informationen als ein klassischer Bildsensor oder als ein Bildsensor, der nur einen Farbfilter und einen zusätzlichen Filter umfasst.

Beispielsweise ermöglicht die Verwendung von zwei Absorptionsfiltern mit unterschiedlichen optischen Bandbreiten, in denen Wasser unterschiedliche Absorptionsraten hat, eine Erkennung von Wasser auf einer Fahrbahnoberfläche.

Andernfalls ermöglicht die Verwendung von zwei Absorptionsfiltern mit unterschiedlichen optischen Bandbreiten, in denen Chlorophyll oder Stickstoff unterschiedliche Absorptionsraten hat, eine Detektion von Pflanzen und/oder organischen Materialien oder Stoffen.

Die Verwendung von Polarisationsfiltern mit unterschiedlichen Polarisationswinkeln ermöglicht zum Beispiel eine Unterscheidung zwischen Wasser, Schnee und Glatteis. Die Reflexion von flüssigem Wasser zeigt ein hohes Polarisationsverhältnis des Lichts mit vorwiegend horizontaler Ausrichtung, während die Eiskristalle den Lichtstrahl streuen und eine Rotation der Welle verursachen. Eiskristalle ergeben eine stärker gestreute Polarisation mit leicht verschobener Orientierung.

Bei Ausführungsbeispielen weist die erste optische Bandbreite eine Bandbreite auf, die aus einem Spektralbereich zwischen 400 nm und 900 nm ausgewählt ist. Gleichzeitig weist die zweite optische Bandbreite eine Bandbreite auf, die aus einem Spektralbereich zwischen 900 nm und 1200 nm ausgewählt ist.

Durch eine oben genannte Auswahl der ersten optischen Bandbreite und der zweiten optischen Bandbreite wird ein optimaler Intensitätsunterschied in Bereichen mit Wasser zwischen Sensoraufnahmen ermöglicht.

Bei Ausführungsbeispielen weist die erste optische Bandbreite bei einer Halbwertbreite einen Wert zwischen 820 nm und 870 nm und die zweite optische Bandbreite bei der Halbwertbreite einen Wert zwischen 920 nm und 970 nm auf.

Durch eine optimale Auswahl der ersten optischen Bandbreite und der zweiten optischen Bandbreite wird ein möglichst maximaler Intensitätsunterschied in Bereichen mit Wasser zwischen Sensoraufnahmen ermöglicht.

Bei Ausführungsbeispielen sind die Polarisationscharakteristik des ersten Polarisationsfilters und die Polarisationscharakteristik des zweiten Polarisationsfilters 90° zueinander versetzt ausgebildet.

Gleichmäßig verteilte Polarisationscharakteristiken bzw. Polarisationswinkel der Polarisationsfilter liefern die meisten Informationen über die an der Oberfläche reflektierenden Lichtstrahlen. Zwei Polarisationsfilter liefern schon ausreichende Informationen über die Polarisationsebene des Lichtstrahls.

Bei Ausführungsbeispielen weist der Bildsensor wenigstens einen weiteren zusätzlichen Absorptionsfilter und/oder Polarisationsfilter auf.

Der weitere zusätzliche Absorptionsfilter erlaubt es, weitere Materialien, wie zum Beispiel organische Materialien oder Pflanzen, zu erkennen, und/oder der weitere zusätzliche Polarisationsfilter ermöglicht eine noch genauere Bestimmung der Polarisation der an der Oberfläche reflektierenden Lichtstrahlen.

Bei Ausführungsbeispielen sind der wenigstens eine Farbfilter eines Bildelements und der wenigstens eine zusätzliche Filter des Bildelements in der ersten Richtung nebeneinander angeordnet.

Der Bildsensor einer Kamera, die in eine Fahrtrichtung ausgerichtet ist, nimmt die Straße in einem flachen Winkel verzerrt und/oder gestaucht auf. Da die vertikale Achse stärker gestaucht ist als die horizontale Achse, ist die Auflösung in vertikaler Ausrichtung wertvoller. Die in der ersten Richtung nebeneinander angeordneten Filterelemente schaffen eine maximale vertikale Auflösung, bei der jedes Bildelement nur eine Zeile hat.

Bei Ausführungsbeispielen sind der wenigstens eine Farbfilter und der wenigstens eine zusätzliche Filter zweizeilig in der ersten Richtung angeordnet.

Der Bildsensor einer Kamera, die in eine Fahrtrichtung ausgerichtet ist, nimmt die Straße in einem flachen Winkel verzerrt und/oder gestaucht auf. Da die vertikale Achse stärker gestaucht ist als die horizontale Achse, ist die Auflösung in der vertikalen Ausrichtung wertvoller als die Auflösung in der horizontalen Ausrichtung. Ist die Anzahl der Filterelemente des Bildelements zum Beispiel höher als eine vordefinierte Anzahl, können die Filterelemente des Bildelements zweizeilig in der ersten Richtung angeordnet werden. So wird eine möglichst maximale vertikale Auflösung erzielt geschafft, bei der die Filterelemente des Bildelements immer noch denselben Teil der Fahrbahnoberfläche aufnehmen können.

Bei Ausführungsbeispielen gehören der wenigstens eine Farbfilter zu einem ersten Haufen und der wenigstens eine zusätzliche Filter zu einem zweiten Haufen.

Die Verarbeitung der Informationen wird somit vereinfacht. Die Filterelemente in dem ersten Haufen detektieren, ähnlich wie bei den klassischen Kamerasensoren, die Farbinformationen. Somit können die Farbinformationen mit bekannten Methoden verarbeitet werden und nur die neuen zusätzlichen Filterelemente des zweiten Haufens benötigen neue Bildverarbeitungsmethoden.

Bei Ausführungsbeispielen sind der erste Haufen und der zweite Haufen zweizeilig nebeneinander in der ersten Richtung angeordnet.

Diese Anordnung ermöglicht eine vereinfachte Informationsverarbeitung mit einer möglichst maximalen vertikalen Auflösung.

Bei Ausführungsbeispielen ist für jedes Bildelement jeder Bildsensorabschnitt, der einem eigenen Filterelement in dem Bildelement zugeordnet ist, selektiv auslesbar.

Der erfinderische Bildsensor erweitert einen klassischen Kamerasensor um zusätzliche Filterelemente. Jeder Bildsensorabschnitt, der einem eigenen Filterelement in einem Bildelement zugeordnet ist, ist selektiv auslesbar. Somit kann der erfinderische Bildsensor die verschiedenen Informationen voneinander trennen.

Das Filterelement ohne Absorptions- oder Polarisationswirkung ist als optisches Allpassfilter oder als Öffnung oder Loch in einer Filterschicht ausgebildet.

Optische Allpassfilter, Öffnungen oder Löcher sind die günstigsten Lösungen, um Filterelemente ohne Absorptions- oder Polarisationswirkung zu schaffen.

Weitere Ausführungsbeispiele gemäß der vorliegenden Erfindung schaffen Fahrzeuge, stationäre Geräte oder Drohnen mit einem erfinderischen Bildsensor, der in eine Fahrtrichtung einer Fahrbahnoberfläche ausgerichtet ist. Hierbei ist der Bildsensor so angeordnet, dass die erste Richtung des Bildsensors quer zur Fahrtrichtung und die zweite Richtung des Bildsensors längs zur Fahrtrichtung angeordnet ist. Die Fahrzeuge, stationären Geräte oder Drohnen sind ausgebildet, um einen entfernten Server oder einen Fahrer oder eine Fahrerin über den Zustand oder über einen gefährlichen Zustand der Fahrbahnoberfläche zu informieren.

Weitere Ausführungsbeispiele gemäß der vorliegenden Erfindung schaffen entsprechende Verfahren zum Betreiben des Bildsensors und/oder zum Herstellen des Bildsensors.

Ausführungsbeispiele gemäß der vorliegenden Erfindung schaffen eine Kamera oder einen Bildsensor einer Kamera zur Erkennung von Gefahren im Straßenverkehr mit gesteigerter Wahrnehmung für Wasser auf Straßenoberflächen.

Ausführungsbeispiele gemäß der vorliegenden Erfindung werden nachfolgend bezugnehmend auf die beiliegenden Figuren näher erläutert.

Fig. 1    zeigt eine schematische Darstellung eines Ausführungsbeispiels eines Bildsensors mit rasterförmig angeordneten Bildelementen, die eine Mehrzahl von räumlich nebeneinander angeordneten Filterelementen aufweisen;

Fig. 2    zeigt eine schematische Darstellung eines Ausführungsbeispiels einer Mehrzahl von Filterelementen eines Bildelements mit Farbfiltern, zwei Absorptionsfiltern mit unterschiedlichen optischen Bandbreiten und zwei Polarisationsfiltern mit unterschiedlichen Polarisationscharakteristiken;

Fig. 3    zeigt eine schematische perspektivische Darstellung einer Fahrbahnoberfläche mit einem Rastermuster und einen Rahmen, der eine Sensoraufnahme der Fahrbahnoberfläche repräsentiert;

Fig. 4a    zeigt eine schematische Darstellung einer in die Fahrtrichtung ausgerichteten Kamera mit einem Öffnungswinkel a, die eine Straßenoberfläche, dargestellt durch die punktierte Linie, in einem flachen Winkel φ aufnimmt;

Fig. 4b    zeigt eine schematische Darstellung einer Sensoraufnahme der Kamera in Figur 4a;

Fig. 5    zeigt ein Diagramm mit der Kennlinie der Verzerrung der Achsen x und y in Abhängigkeit von dem Betrachtungswinkel φ;

Fig. 6    zeigt eine schematische Darstellung eines Ausführungsbeispiels eines Fahrzeugs mit dem erfinderischen Bildsensor;

Fig. 7a    zeigt eine schematische Darstellung eines Ausführungsbeispiels einer Drohne;

Fig. 7b    zeigt eine schematische Darstellung eines Ausführungsbeispiels eines stationären Geräts.

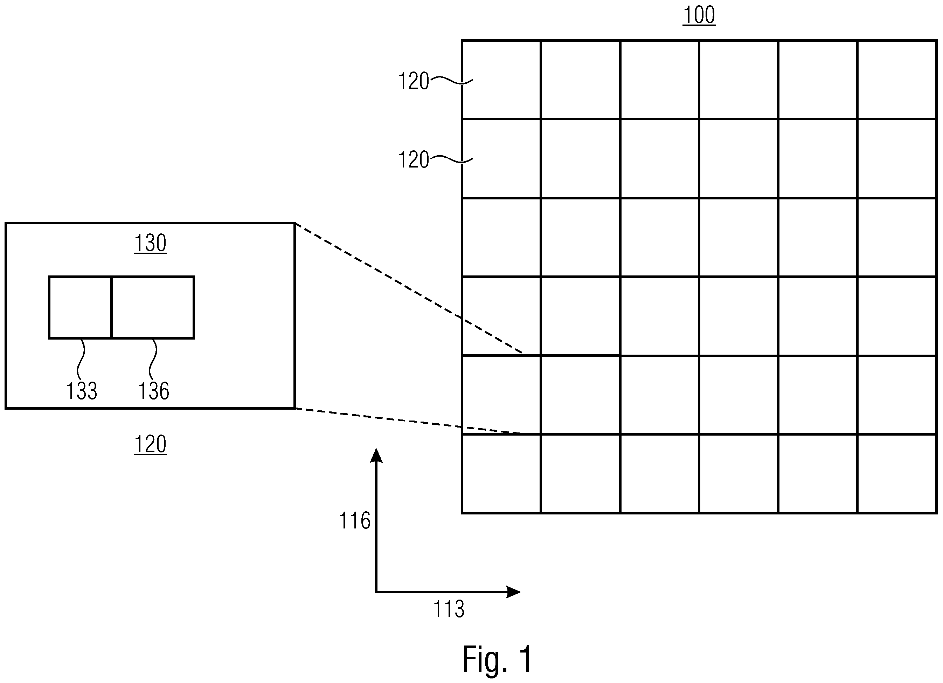

Fig. 1 zeigt eine schematische Darstellung eines Ausführungsbeispiels eines Bildsensors 100 mit einer Vielzahl von rasterförmig angeordneten Bildelementen 120 in einer ersten Richtung 113 und in einer zweiten Richtung 116, die zu der ersten Richtung 113 orthogonal ist.

Jedes Bildelement 120 der Vielzahl von Bildelementen 120 weist eine Mehrzahl von räumlich nebeneinander angeordneten Filterelementen 130 auf. Die Mehrzahl von Filterelementen 130 weist wenigstens einen Farbfilter 133 und wenigstens einen zusätzlichen Filter 136 auf.

Der Farbfilter 133 ist ausgebildet, um das Licht farbspezifisch zu filtern, und ermöglicht es dem Bildsensor 100 damit, Farbinformationen zu detektieren. Einer der am häufigsten verwendeten Farbfilter ist der RGB-Farbfilter. Hierbei werden die Farben Rot, Grün und Blau detektiert.

Der zusätzlichen Filter 136 kann zum Beispiel einen Absorptionsfilter, einen Polarisationsfilter und/oder ein Filterelement ohne Absorptions- oder Polarisationswirkung aufweisen. Absorptionsinformationen ermöglichen es, konkrete Materialien mit bestimmen Absorptionseigenschaften in einer Sensoraufnahme leichter zu finden, und Sensoraufnahmen mit Polarisationsfiltern ermöglichen es, die an einer Oberfläche reflektierenden Lichtstrahlen zu analysieren.

Das Filterelement ohne Absorptions- oder Polarisationswirkung kann zum Beispiel einen Farbfilter in einem RGB-Farbfilter ersetzen. Die Farbinformationen des eingesparten Farbfilters können mithilfe von den anderen Farbfiltern berechnet werden, da aus drei grundlegenden Farben, wie zum Beispiel Rot, Grün und Blau, alle andere Farben mischbar sind.

Jeder Bildsensorabschnitt, der einem eigenen Filterelement in einem Bildelement zugeordnet ist, ist selektiv auslesbar. Somit kann der erfinderische Bildsensor neben Farbinformationen zusätzliche Informationen, wie z. B. Absorptions- und/oder Polarisationsinformationen, getrennt detektieren.

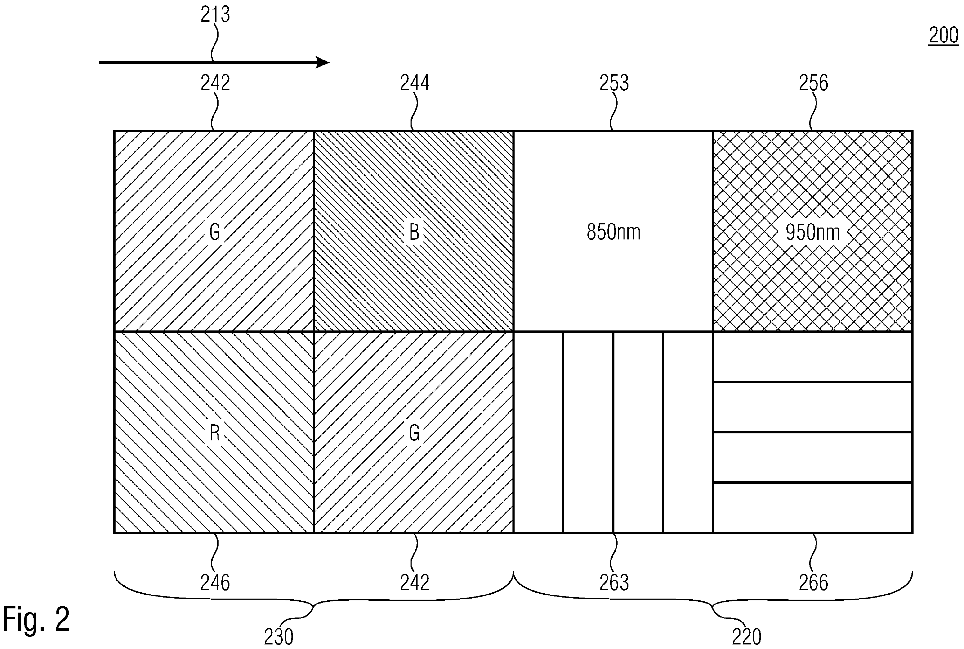

Die zusätzlichen Informationen können eine Erkennung von Gefahren auf einer Fahrbahnoberfläche erleichtern. Weitere mögliche zusätzliche Filterelemente werden noch in Figur 2 gezeigt.

Fig. 2 zeigt eine schematische Darstellung eines Ausführungsbeispiels einer Mehrzahl von Filterelementen 200 eines Bildelements, zum Beispiel des Bildelements 120 in Figur 1. Wie in Figur 1 gezeigt wurde, weist die Mehrzahl von Filterelementen 200 wenigstens einen Farbfilter und wenigstens einen zusätzlichen Filter auf.

Die Mehrzahl von Filterelementen 200 weist einen RGB-Farbfilter auf, der einen roten Filter 246, einen blauen Filter 244 und zwei grüne Filter 242 aufweist.

Ähnlich wie bei klassischen Kamerasensoren, ist der RGB-Farbfilter des Bildelements ausgebildet, um Farbinformationen zu detektieren. Somit können die Farbinformationen mit bekannten Methoden verarbeitet werden.

Die Mehrzahl von Filterelementen 200 weist noch weitere zusätzliche Filter auf, die einen ersten Absorptionsfilter 253 mit einer Bandbreite von 850 nm bzw. mit einer Halbwertsbreite zwischen 820 nm und 870 nm, einen zweiten Absorptionsfilter 256 mit einer Bandbreite von 950 nm bzw. mit einer Halbwertsbreite zwischen 920 nm und 970 nm, einen ersten Polarisationsfilter 263 mit vertikaler Ausrichtung und einen zweiten Polarisationsfilter 266 mit horizontaler Ausrichtung aufweisen.

Die Bandbreiten des ersten und des zweiten Absorptionsfilters 253, 256 sind ausgewählt, um die Absorptionscharakteristik von Wasser auszunutzen und dadurch die Erkennung eines Wasseraufkommens zu erleichtern. Daher liefern das erste und das zweite Absorptionsfilter 253, 256 unterschiedliche Intensitätswerte in Bereichen mit Wasser.

Optional kann die Kamera oder der Bildsensor der Kamera noch um weitere Filter ergänzt werden. Eine Verwendung von zusätzlichen Absorptionsfiltern mit unterschiedlichen optischen Bandbreiten, in denen Chlorophyll oder Stickstoff unterschiedliche Absorptionsraten hat, ist ebenso möglich, um Pflanzen und/oder organische Materialien oder Stoffe zu detektieren. Eine besonders starke Absorption des Chlorophylls wird mit Absorptionsfiltern mit Bandbreiten von 450 nm und 650 nm detektiert. Die Erkennung von Stickstoff erfordert Absorptionsfilter mit Bandbreiten von 740 nm, 820 nm und 860 nm. Stickstoff befindet sich in organischen Materialien, Stoffen oder in Pflanzen.

Polarisationsfilter ermöglichen es, die an der Oberfläche reflektierenden Lichtstrahlen zu analysieren und dadurch die unterschiedlichen Wasseraufkommen zu differenzieren. Beispielsweise zeigt ein hohes Polarisationsverhältnis mit vorwiegend horizontaler Ausrichtung flüssiges Wasser, während eine stärker gestreute Polarisation mit leicht verschobener Orientierung Eis andeutet.

Eine Verwendung von einem zusätzlichen Polarisationsfilter mit einem Polarisationswinkel von 45° ermöglicht eine noch genauere Bestimmung der Polarisation.

Die Farbfilter 242, 244, 246 gehören zu einem ersten Haufen 230 und die zusätzlichen Filter 253, 256, 263, 266 gehören zu einem zweiten Haufen 220. Die Filterelemente des ersten Haufens 230 und des zweiten Haufens 220 sind zweizeilig nebeneinander in der ersten Richtung 213 angeordnet.

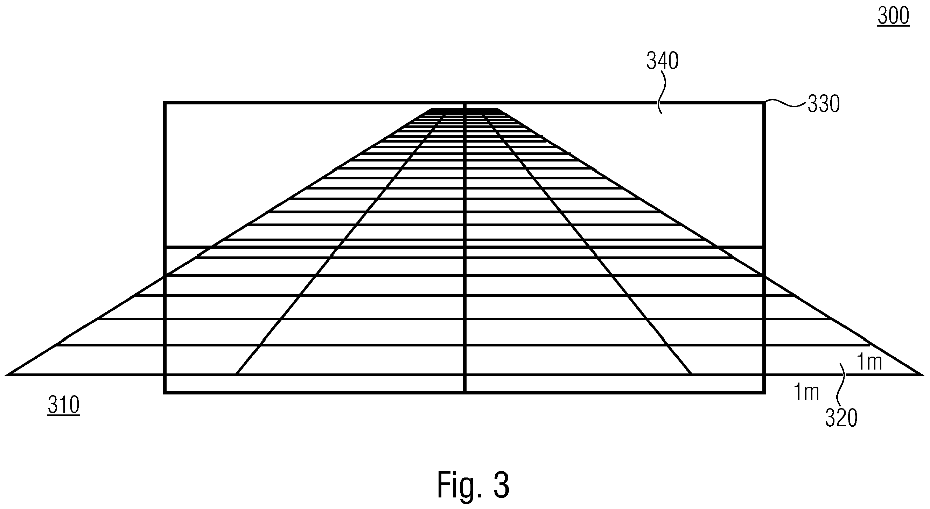

Die Filterelemente des Bildsensors sind einzeilig oder zweizeilig in der ersten Richtung nebeneinander angeordnet, um eine maximale vertikale Auflösung zu erreichen. Die Auflösung in der vertikalen Ausrichtung ist wertvoller als die Auflösung in der horizontalen Ausrichtung, wie in Figur 3 erläutert wird.

Fig. 3 zeigt eine schematische perspektivische Darstellung 300 einer Fahrbahnoberfläche 310 mit einem Rastermuster. Jedes Kästchen 320 des Rastermusters repräsentiert einen quadratischen Bereich von 1 m × 1 m auf der Fahrbahnoberfläche 310.

Fig. 3 zeigt einen Rahmen 330. Die Bildinformationen innerhalb des Rahmens repräsentieren eine Sensoraufnahme 340, z. B. eine Sensoraufnahme 340 des Bildsensors 100 in Figur 1. Die Sensoraufnahme 340 zeigt, dass die Straßenabschnitte oder die Kästchen 320 der Sensoraufnahme 340 verzerrt sind.

Es ist deutlich zu sehen, dass die Ebene der Fahrbahnoberfläche 310 in der Sensoraufnahme 340 verzerrt und gestaucht ist. Die vertikale Achse ist stärker gestaucht als die horizontale Achse und deswegen ist die Auflösung in der vertikalen Ausrichtung wertvoller als die Auflösung in der horizontalen Ausrichtung.

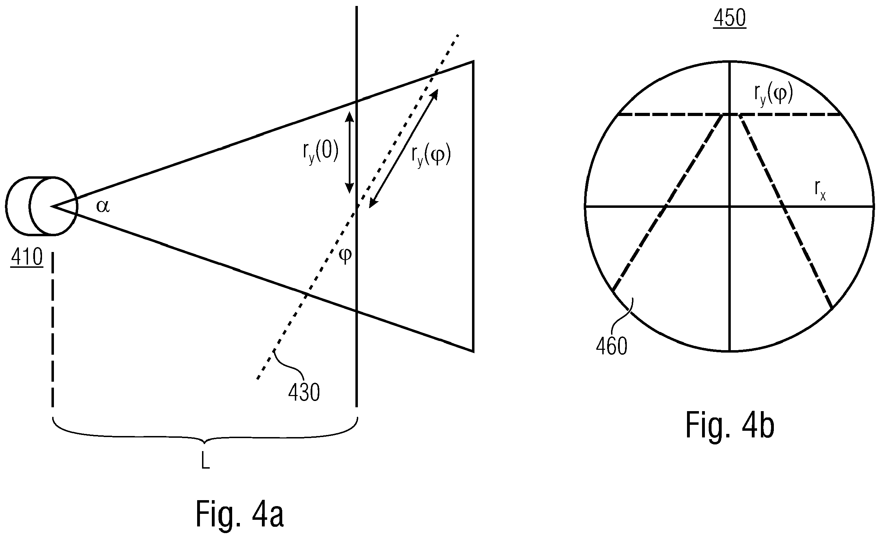

Der Grad des Verhältnisses zwischen der vertikalen Achse und der horizontalen Achse ist abhängig von dem Winkel der Kamera oder des Kamerasensors zu der Straßenoberfläche 310, wie in den Figuren 4a, 4b erläutert wird.

Figur 4a zeigt eine schematische Darstellung einer in die Fahrtrichtung ausgerichteten Kamera 410 mit einem Öffnungswinkel a, die eine Straßenoberfläche, dargestellt durch die punktierte Linie 430, in einem flachen Winkel φ aufnimmt. Bei einem Winkel von φ = 90° ist die Kamera 410 oder die Blickrichtung der Kamera 410 parallel zu der Straßenoberfläche.

Ist die Blickrichtung des Bildsensors 410 oder der Kamera 410 senkrecht (φ = 0°) zu der Straßenoberfläche, sieht die Kamera in einer Entfernung L von der Straßenoberfläche ein unverzerrtes Straßenstück mit einer Länge von $2 \cdot r_y(0)$.

Ist der Winkel φ größer als 0° und kleiner als 90° (0° < φ < 90°), zeigt die Sensoraufnahme, wie z. B. die Sensoraufnahme 340 in Figur 3, ein längeres Straßenstück, nämlich ein Straßenstück mit einer Länge von $2 \cdot r_y(\varphi)$. Figur 4a zeigt, dass die Verzerrung der vertikalen Achse einer Sensoraufnahme von dem Winkel der Blickrichtung der Kamera zur Straßenoberfläche abhängig ist.

Figur 4b zeigt eine schematische Darstellung einer Sensoraufnahme 450 der Kamera 410 in Figur 4a. Die Sensoraufnahme 450 zeigt eine schematische Darstellung einer Straßenoberfläche 460. Die Breite der Straßenoberfläche 460 staucht sich mit der Entfernung von der Kamera.

Die Sensoraufnahme 450 zeigt, dass der Grad der Verzerrung (g oder g($\varphi$)) der vertikalen und der horizontalen Achse das Verhältnis zwischen der in der Sensoraufnahme 450 angezeigten vertikalen und horizontalen Länge $r_y(\varphi)$ und $r_x$ ist.

Der Grad der Verzerrung der Achsen x und y in Abhängigkeit des Winkels der Blickrichtung der Kamera zur Straßenoberfläche kann mit der folgenden Formel berechnet und in einem Diagramm dargestellt werden:

$$g(\varphi) = \frac{r_y(\varphi)}{r_x} = \frac{\cos(\alpha)}{\sin\left(\frac{\pi}{2} - \varphi - \alpha\right)}.$$

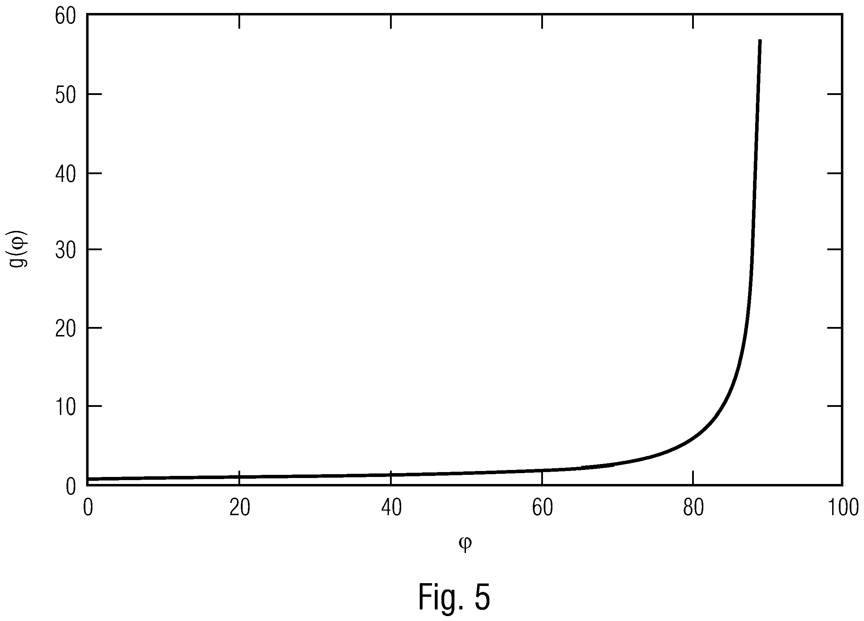

Fig. 5 zeigt ein Diagramm mit der Kennlinie der Verzerrung der Achsen x und y in Abhängigkeit von dem Betrachtungswinkel $\varphi$.

Fig. 5 kann so interpretiert werden, dass mit einem zunehmend flachen Kamerawinkel ($\varphi \sim 0$; Kamera ist parallel zu der Straßenoberfläche) die y-Achse ungleich mehr gestaucht wird als die x-Achse. Bei einer zu großen Stauchung kommt es dazu, dass ein Objekt im aufgenommenen Bild auf weniger als einen Pixel reduziert wird, welches daraufhin nicht mehr dargestellt und somit das Objekt nicht mehr detektiert werden kann. Dieser Effekt wird durch den erfinderischen Bildsensor mit einer möglichst maximalen vertikalen Auflösung und durch einen steilen Kamerawinkel minimiert.

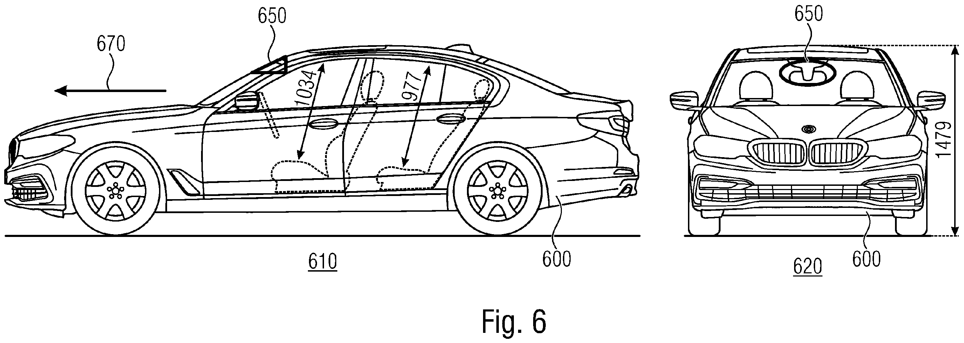

Um den Kamerawinkel so steil wie möglich zu halten, ist die Kamera, wie in Figur 6 gezeigt wird, auf dem höchst möglichen Punkt in einem Fahrzeug angebracht.

Figur 6 zeigt eine Seitenansicht 610 und eine Frontalansicht 620 eines Fahrzeugs 600 mit einem erfinderischen Bildsensor 650, der in die Fahrtrichtung 670 des Fahrzeugs 600 ausgerichtet ist.

Beispielsweise bei einer Einbauhöhe von etwa 1400 mm und einer angestrebten Mindestreichweite von 50 m beträgt der Kamerawinkel zur Straße etwa 88,4°, was für den Bereich 50 m entfernt von der Kamera einem Achsenverhältnis von etwa 1:35 entspricht. Dies bedeutet, dass die Auflösung in der vertikalen Ausrichtung nur 1/35 der horizontalen Auflösung ist und somit die Auflösung in der vertikalen Ausrichtung wertvoller ist. Das Filtermosaik oder die Mehrzahl der Filterelemente wird daher in einer flachen Struktur erweitert, um eine höchstmögliche vertikale Auflösung zu gewährleisten. Mögliche Filterelementstrukturen sind die einzeilig (1xN) oder die zweizeilig (2xN) angeordneten Filterelemente.

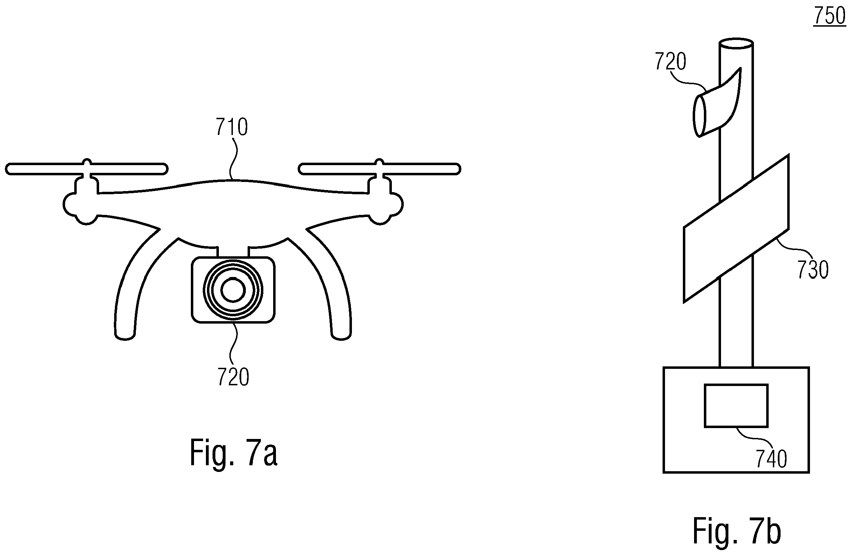

Neben den Fahrzeugen können stationäre Geräte oder Drohnen mit dem erfinderischen Bildsensor ausgestattet sein, wie in Figuren 7a, 7b erläutert wird.

Figur 7a zeigt eine Drohne 710 mit einem Bildsensor 720.

Hierbei kann der erfinderische Bildsensor 720 in eine Fahrtrichtung einer Fahrbahnoberfläche ausgerichtet sein. Der Bildsensor 720 ist möglichst so angeordnet, dass die erste Richtung des Bildsensors quer zur Fahrtrichtung und die zweite Richtung des Bildsensors längs zur Fahrtrichtung angeordnet ist. Die Drohne ist ausgebildet, um einen entfernten Server über den Zustand oder über einen gefährlichen Zustand der Fahrbahnoberfläche zu informieren.

Figur 7b zeigt ein stationäres Gerät 750 mit einem Bildsensor 720, einer Anzeige 730 und einem Prozessor 740.

Der erfinderische Bildsensor 720 kann in eine Fahrtrichtung einer Fahrbahnoberfläche ausgerichtet sein. Der Bildsensor 720 ist möglichst so angeordnet, dass die erste Richtung des Bildsensors 720 quer zur Fahrtrichtung und die zweite Richtung des Bildsensors 720 längs zur Fahrtrichtung angeordnet ist.

Der Prozessor 740 ist ausgebildet, um einen Zustand der Fahrbahnoberfläche anhand der Sensoraufnahme des Bildsensors 720 zu schätzen und um einen Fahrer oder eine Fahrerin mithilfe der Anzeige 730 über den Zustand oder über einen gefährlichen Zustand der Fahrbahnoberfläche zu informieren.

Das Gerät 750 kann zusätzlich oder alternativ ausgebildet sein, um einen entfernten Server über den Zustand oder über einen gefährlichen Zustand der Fahrbahnoberfläche zu informieren.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Ein Bildsensor (100, 410, 650, 720) mit folgenden Merkmalen:

    einer Bildelementstruktur (100), die eine Vielzahl von rasterförmig angeordneten Bildelementen (120) in einer ersten Richtung (113, 213) und in einer zweiten Richtung (116), die zu der ersten Richtung (113, 213) orthogonal ist, aufweist,
    wobei ein Bildelement (120) der Vielzahl von Bildelementen (120) eine Mehrzahl von räumlich nebeneinander angeordneten Filterelementen (130, 133, 136, 242, 244, 246, 253, 256, 263, 266) aufweist,
    wobei die Mehrzahl von Filterelementen (130, 133, 136, 242, 244, 246, 253, 256, 263, 266) wenigstens einen Farbfilter (133, 242, 244, 246) und wenigstens einen zusätzlichen Filter (136, 253, 256, 263, 266) aus einer Filtergruppe aufweist, und
    wobei die Filtergruppe einen ersten Absorptionsfilter (136, 253, 256) mit einer ersten optischen Bandbreite, einen zweiten Absorptionsfilter (136, 253, 256) mit einer zweiten optischen Bandbreite, die sich von der ersten optischen Bandbreite unterscheidet, einen ersten Polarisationsfilter (136, 263, 266) mit einer ersten Polarisationscharakteristik, einen zweiten Polarisationsfilter (136, 263, 266) mit einer zweiten Polarisationscharakteristik, die sich von der ersten Polarisationscharakteristik unterscheidet, und ein Filterelement (136) ohne Absorptions- oder Polarisationswirkung aufweist.

2. Der Bildsensor (100, 410, 650, 720) gemäß Anspruch 1, bei dem die Mehrzahl von Filterelementen (130, 133, 136, 242, 244, 246, 253, 256, 263, 266) einen Rot-Grün-Blau-Farbfilter (133, 242, 244, 246), einen ersten Absorptionsfilter (136, 253, 256) mit einer ersten optischen Bandbreite, einen zweiten Absorptionsfilter (136, 253, 256) mit einer zweiten optischen Bandbreite, die sich von der ersten optischen Bandbreite unterscheidet, einen ersten Polarisationsfilter (136, 263, 266) mit einer ersten Polarisationscharakteristik und einen zweiten Polarisationsfilter (136, 263, 266) mit einer zweiten Polarisationscharakteristik aufweist, die sich von der ersten Polarisationscharakteristik unterscheidet.

3. Der Bildsensor (100, 410, 650, 720) gemäß Anspruch 1 oder 2, bei dem die erste optische Bandbreite eine Bandbreite umfasst, die aus einem Spektralbereich zwischen 400 nm und 900 nm ausgewählt ist; und die zweite optische Bandbreite eine Bandbreite umfasst, die aus einem Spektralbereich zwischen 900 nm und 1200 nm ausgewählt ist, oder

   bei dem die erste optische Bandbreite bei einer Halbwertsbreite einen Wert zwischen 820 nm und 870 nm aufweist; und die zweite optische Bandbreite bei der Halbwertsbreite einen Wert zwischen 920 nm und 970 nm aufweist, oder
   bei dem die Polarisationscharakteristik des ersten Polarisationsfilters (136, 263, 266) und die Polarisationscharakteristik des zweiten Polarisationsfilters (136, 263, 266) 90° zueinander versetzt ausgebildet sind, oder
   der wenigstens einen weiteren zusätzlichen Absorptionsfilter (136, 253, 256) und/oder Polarisationsfilter (136, 263, 266) aufweist, oder
   bei dem der wenigstens eine Farbfilter (133, 242, 244, 246) und der wenigstens eine zusätzliche Filter (136, 253, 256, 263, 266) in der ersten Richtung (113, 213) nebeneinander angeordnet sind, oder
   bei dem der wenigstens eine Farbfilter (133, 242, 244, 246) und der wenigstens eine zusätzliche Filter (136, 253, 256, 263, 266) zweizeilig in der ersten Richtung (113, 213) angeordnet sind.

4. Der Bildsensor (100, 410, 650, 720) gemäß einem der Ansprüche 1 bis 3, bei dem der wenigstens eine Farbfilter (133, 242, 244, 246) zu einem ersten Haufen (230) gehört und der wenigstens eine zusätzliche Filter (136, 253, 256, 263, 266) zu einem zweiten Haufen (220) gehört.

5. Der Bildsensor (100, 410, 650, 720) gemäß Anspruch 4, bei dem der erste Haufen (230) und der zweite Haufen (220) zweizeilig nebeneinander in der ersten Richtung (113, 213) angeordnet sind.

6. Der Bildsensor (100, 410, 650, 720) gemäß einem der Ansprüche 1 bis 5, bei dem für jedes Bildelement (120) jeder Bildsensorabschnitt, der einem eigenen Filterelement (130, 133, 136, 242, 244, 246, 253, 256, 263, 266) in dem Bildelement (120) zugeordnet ist, selektiv auslesbar ist.

7. Der Bildsensor (100, 410, 650, 720) gemäß einem der Ansprüche 1 bis 5, bei dem das Filterelement (136) ohne Absorptions- oder Polarisationswirkung als optisches Allpassfilter oder als Öffnung oder Loch in einer Filterschicht ausgebildet ist.

8. Ein Fahrzeug (600) mit folgenden Merkmalen:

   einer Fahrzeugvorderseite, die zu einer Fahrbahnoberfläche (310, 430, 460) in eine Fahrtrichtung (670) des Fahrzeugs gerichtet ist und sich bezüglich der Fahrbahnoberfläche (310, 430, 460) nach oben erstreckt; und
   einem Bildsensor (100, 410, 650, 720) gemäß einem der Ansprüche 1 bis 7, der an der Fahrzeugvorderseite in einem oberen Bereich der Fahrzeugvorderseite angebracht ist und in die Fahrtrichtung (670) ausgerichtet ist.

9. Das Fahrzeug (600) gemäß Anspruch 8, bei dem der Bildsensor (100, 410, 650, 720) so angeordnet ist, dass die erste Richtung (113, 213) der Bildelementstruktur (100) quer zur Fahrtrichtung (670) angeordnet ist und dass die zweite Richtung (116) der Bildelementstruktur (100) längs zur Fahrtrichtung (670) angeordnet ist,
   wobei der wenigstens eine Farbfilter (133, 242, 244, 246) des Bildelements (120) des Bildsensors (100, 410, 650, 720) und der wenigstens eine zusätzliche Filter (136, 253, 256, 263, 266) des Bildelements (120) nebeneinander in der ersten Richtung (113, 213) angeordnet sind.

10. Ein stationäres Gerät (750), mit folgenden Merkmalen:

   einer Vorderseite, die zu einer Fahrbahnoberfläche (310, 430, 460) in eine Fahrtrichtung (670) eines Fahrzeugs (600) gerichtet ist und sich bezüglich der Fahrbahnoberfläche (310, 430, 460) nach oben erstreckt; und
einem Bildsensor (100, 410, 650, 720) gemäß einem der Ansprüche 1 bis 7, der an der Vorderseite in einem oberen Bereich der Vorderseite angebracht ist und in die Fahrtrichtung (670) ausgerichtet ist.

11. Das stationäre Gerät (750) gemäß Anspruch 10, bei dem der Bildsensor (100, 410, 650, 720) so angeordnet ist, dass die erste Richtung (113, 213) der Bildelementstruktur (100) quer zur Fahrtrichtung (670) angeordnet ist und dass die zweite Richtung (116) der Bildelementstruktur (100) längs zur Fahrtrichtung (670) angeordnet ist;

wobei der wenigstens eine Farbfilter (133, 242, 244, 246) des Bildelements (120) des Bildsensors (100, 410, 650, 720) und der wenigstens eine zusätzliche Filter (136, 253, 256, 263, 266) des Bildelements (120) nebeneinander in der ersten Richtung (113) angeordnet sind, oder
bei dem das Gerät (750) eine Hinterseite, einen Prozessor (740) und eine Anzeige (730) aufweist,
wobei die Hinterseite gegenüberliegend und parallel zu der Vorderseite ist;
wobei der Prozessor (740) ausgebildet ist, um einen Zustand der Fahrbahnoberfläche (310, 430, 460) anhand der Sensoraufnahmen (340, 460) des Bildsensors (100, 410, 650, 720) zu schätzen;
wobei die Anzeige (730) an der Hinterseite des Gerätes (750) angebracht ist und in eine Richtung entgegengesetzt zu der Fahrtrichtung (670) ausgerichtet ist,
wobei die Anzeige (730) ausgebildet ist, um einen Fahrer über den Zustand der Fahrbahnoberfläche (310, 430, 460) zu informieren oder um einen Fahrer über einen gefährlichen Zustand der Fahrbahnoberfläche (310, 430, 460) zu informieren,
oder
bei dem das Gerät eine Schnittstelle aufweist, die ausgebildet ist, um einen entfernten Server über den Zustand der Fahrbahnoberfläche (310, 430, 460) zu informieren oder um einen entfernten Server über einen gefährlichen Zustand der Fahrbahnoberfläche (310, 430, 460) zu informieren.

12. Eine Drohne (710) mit einem Bildsensor (100, 410, 650, 720) gemäß einem der Ansprüche 1 bis 7, bei der der Bildsensor (100, 410, 650, 720) ausgebildet ist, um in eine Fahrtrichtung (670) einer Fahrbahnoberfläche (310, 430, 460) ausgerichtet zu sein.

13. Die Drohne (710) gemäß Anspruch 12, bei der der Bildsensor (100, 410, 650, 720) so angeordnet ist, dass die erste Richtung (113, 213) der Bildelementstruktur (100) quer zur Fahrtrichtung (670) angeordnet ist und dass die zweite Richtung (116) der Bildelementstruktur (100) längs zur Fahrtrichtung (670) angeordnet ist;

wobei der wenigstens eine Farbfilter (133, 242, 244, 246) des Bildelements (120) des Bildsensors (100, 410, 650, 720) und der wenigstens eine zusätzliche Filter (136, 253, 256, 263, 266) des Bildelements (120) nebeneinander in der ersten Richtung (113, 213) angeordnet sind, oder.
die eine Schnittstelle aufweist, die ausgebildet ist, um einen entfernten Server über den Zustand der Fahrbahnoberfläche (310, 430, 460) zu informieren oder um einen entfernten Server über einen gefährlichen Zustand der Fahrbahnoberfläche (310, 430, 460) zu informieren.

14. Verfahren zum Betreiben eines Bildsensors (100, 410, 650, 720) mit einer Bildelementstruktur (100), die eine Vielzahl von rasterförmig angeordneten Bildelementen (120) in einer ersten Richtung (113, 213) und in einer zweiten Richtung (116), die zu der ersten Richtung (113, 213) orthogonal ist, aufweist, wobei ein Bildelement (120) der Vielzahl von Bildelementen (120) eine Mehrzahl von räumlich nebeneinander angeordneten Filterelementen (130, 133, 136, 242, 244, 246, 253, 256, 263, 266) aufweist, wobei die Mehrzahl von Filterelementen (130, 133, 136, 242, 244, 246, 253, 256, 263, 266) wenigstens einen Farbfilter (133, 242, 244, 246) und wenigstens einen zusätzlichen Filter (136, 253, 256, 263, 266) aus einer Filtergruppe aufweist, wobei die Filtergruppe einen ersten Absorptionsfilter (136, 253, 256) mit einer ersten optischen Bandbreite, einen zweiten Absorptionsfilter (136, 253, 256) mit einer zweiten optischen Bandbreite, die sich von der ersten optischen Bandbreite unterscheidet, einen ersten Polarisationsfilter (136, 263, 266) mit einer ersten Polarisationscharakteristik, einen zweiten Polarisationsfilter (136, 263, 266) mit einer zweiten Polarisationscharakteristik, die sich von der ersten Polarisationscharakteristik unterscheidet, und ein Filterelement (136) ohne Absorptions- oder Polarisationswirkung aufweist, mit folgenden Schritten:

Auslesen eines lichtempfindlichen Bereichs, der dem Filter (133, 242, 244, 246) zugeordnet ist; und
Auslesen eines weiteren lichtempfindlichen Bereichs, der dem zusätzlichen Filter (136, 253, 256, 263, 266) zugeordnet ist.

15. Verfahren zum Herstellen eines Bildsensors (100, 410, 650, 720) mit einer Bildelementstruktur (100), die eine Vielzahl von rasterförmig angeordneten Bildelementen (120) in einer ersten Richtung (113, 213) und in einer zweiten Richtung (116), die zu der ersten Richtung (113, 213) orthogonal ist, aufweist, mit folgendem Schritt:

Ausgestalten der Bildelemente (120) der Vielzahl von Bildelementen (120), so dass jedes Bildelement (120) eine Mehrzahl von räumlich nebeneinander angeordneten Filterelementen (130, 133, 136, 242, 244, 246, 253, 256, 263, 266) aufweist, wobei die Mehrzahl von Filterelementen (130, 133, 136, 242, 244, 246, 253, 256, 263, 266) wenigstens einen Farbfilter (133, 242, 244, 246) und wenigstens einen zusätzlichen Filter (136, 253, 256, 263, 266) aus einer Filtergruppe aufweist, wobei die Filtergruppe einen ersten Absorptionsfilter (136, 253, 256) mit einer ersten optischen Bandbreite, einen zweiten Absorptionsfilter (136, 253, 256) mit einer zweiten optischen Bandbreite, die sich von der ersten optischen Bandbreite unterscheidet, einen ersten Polarisationsfilter (136, 263, 266) mit einer ersten Polarisationscharakteristik, einen zweiten Polarisationsfilter (136, 263, 266) mit einer zweiten Polarisationscharakteristik, die sich von der ersten Polarisationscharakteristik unterscheidet, und ein Filterelement (136) ohne Absorptions- oder Polarisationswirkung aufweist.

EP 4 184 932 A1

100

120

120

130

133    136

120

116

113

Fig. 1

Fig. 2

300

330

340

310

320

1m

1m

1m

Fig. 3

Fig. 4a

Fig. 4b

EP 4 184 932 A1

Fig. 5

Fig. 6

Fig. 7a

Fig. 7b

EP 4 184 932 A1

EUROPÄISCHES PATENTAMT · European Patent Office · Office européen des brevets

## EUROPÄISCHER TEILRECHERCHENBERICHT

nach Regel 62a und/oder 63 des Europäischen Patentübereinkommens. Dieser Bericht gilt für das weitere
Verfahren als europäischer Recherchenbericht.

**Nummer der Anmeldung**

**EP 22 19 4383**

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| X | US 2020/280707 A1 (BRIGGS FORREST SAMUEL [US] ET AL) 3. September 2020 (2020-09-03) | 1,3-15 | INV.<br>H04N25/131 |
| A | * Absatz [0012] – Absatz [0023]; Abbildungen 1,2 *<br>----- | 2 | H04N25/133<br>H04N25/13<br>H04N23/11 |
| X | US 2019/378257 A1 (FAN MENG [CN] ET AL) 12. Dezember 2019 (2019-12-12) | 1,3-15 | G06V20/56 |
| A | * Absatz [0095] – Absatz [0101]; Abbildungen 1-3 *<br>----- | 2 | |
| X | US 2010/295947 A1 (BOULANGER PIERRE BENOIT [CA]) 25. November 2010 (2010-11-25) | 1,3-15 | |
| A | * Absätze [0019] – [0022], [0050]; Abbildungen 2-7 *<br>-----<br>-/-- | 2 | |

**RECHERCHIERTE SACHGEBIETE (IPC)**

H04N
G06V

### UNVOLLSTÄNDIGE RECHERCHE

Die Recherchenabteilung ist der Auffassung, daß ein oder mehrere Ansprüche, den Vorschriften des EPÜ
nicht entspricht bzw. entsprechen, so daß nur eine Teilrecherche (R.62a, 63) durchgeführt wurde.

Vollständig recherchierte Patentansprüche:

Unvollständig recherchierte Patentansprüche:

Nicht recherchierte Patentansprüche:

Grund für die Beschränkung der Recherche:

**Siehe Ergänzungsblatt C**

| Recherchenort | Abschlußdatum der Recherche | Prüfer |
|---|---|---|
| **München** | **13. April 2023** | **Seytter, Fritz** |

**Seite 1 von 2**

EP 4 184 932 A1

Europäisches
Patentamt

European
Patent Office

Office européen
des brevets

**EUROPÄISCHER
TEILRECHERCHENBERICHT**

Nummer der Anmeldung

**EP 22 19 4383**

| | **EINSCHLÄGIGE DOKUMENTE** | | **KLASSIFIKATION DER ANMELDUNG (IPC)** |
|---|---|---|---|
| Kategorie | Kennzeichnung des Dokuments mit Angabe, soweit erforderlich der maßgeblichen Teile | Betrifft Anspruch | |
| A | DANIEL F HUBER ET AL: "A Spectro-polarimetric Imager for Intelligent Transportation Systems", INTELLIGENT TRANSPORTATION SYSTEMS, 17. Oktober 1997 (1997-10-17), Seiten 94-102, XP055101934, Proceedings of the SPIE-The International Society for Optical Engineering USA * Section 2 "Spectro-polarimetric imaging system"; Seite 2 - Seite 6; Abbildungen 1-6 * ----- | 1-15 | |
| A | Misener James A.: "UC Berkeley Working Papers Title Investigation Of An Optical Method To Determine The Presence Of Ice On Road Surfaces", CALIFORNIA PATH PROGRAM, 1. Januar 1998 (1998-01-01), Seiten 1-20, XP093017038, Gefunden im Internet: URL:https://escholarship.org/content/qt0q05t0xf/qt0q05t0xf.pdf?t=krnjh1 [gefunden am 2023-01-24] * das ganze Dokument * ----- | 1-15 | **RECHERCHIERTE SACHGEBIETE (IPC)** |

EPO FORM 1503 03.82 (P04C12)

1

Europäisches
Patentamt

European
Patent Office

Office européen
des brevets

**UNVOLLSTÄNDIGE RECHERCHE
ERGÄNZUNGSBLATT C**

**Nummer der Anmeldung**

**EP 22 19 4383**

**Vollständig recherchierbare Ansprüche:**

2

**Unvollständig recherchierte Ansprüche:**

1, 3-15

**Grund für die Beschränkung der Recherche:**

**Der Umfang der Recherche entspricht dem Gegenstand, der von der Anmelderin mit der am 6.4.2023 eingegangenen Antwort auf die Aufforderung nach Regel 63(1) in Form von vorläufigen Ansprüchen eingereicht wurde.**

**ANHANG ZUM EUROPÄISCHEN RECHERCHENBERICHT
ÜBER DIE EUROPÄISCHE PATENTANMELDUNG NR.**

EP 22 19 4383

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-04-2023

| Im Recherchenbericht angeführtes Patentdokument | Datum der Veröffentlichung | Mitglied(er) der Patentfamilie | | Datum der Veröffentlichung |
|---|---|---|---|---|
| US 2020280707 A1 | 03-09-2020 | EP | 3857871 A1 | 04-08-2021 |
| | | JP | 2022513428 A | 08-02-2022 |
| | | US | 10659751 B1 | 19-05-2020 |
| | | US | 2020280707 A1 | 03-09-2020 |
| | | WO | 2020123259 A1 | 18-06-2020 |
| US 2019378257 A1 | 12-12-2019 | CN | 108419061 A | 17-08-2018 |
| | | EP | 3582494 A1 | 18-12-2019 |
| | | US | 2019378257 A1 | 12-12-2019 |
| | | WO | 2018145576 A1 | 16-08-2018 |
| US 2010295947 A1 | 25-11-2010 | CA | 2666470 A1 | 21-11-2010 |
| | | CA | 2705080 A1 | 21-11-2010 |
| | | US | 2010295947 A1 | 25-11-2010 |

EPO FORM P0461

Für nähere Einzelheiten zu diesem Anhang : siehe Amtsblatt des Europäischen Patentamts, Nr.12/82